# EUROPEAN PATENT APPLICATION

(11) **EP 2 658 091 A2**
(43) Date of publication of application: **30.10.2013**
(21) Application number: 12182847.9
(22) Date of filing: 03.09.2012
(51) Int. Cl.: H02K 1/27

(54) **Rotor assembly**

(30) Priority: 23.04.2012 KR 20120042283
(71) Applicant: Samsung Electro-Mechanics Co., Ltd, Suwon Gyunggi-do 443-743 (KR)
(72) Inventor: Han, Moon Kyu, 443-743 Gyunggi-do (KR); Bae, Han Kyung, 443-743 Gyunggi-do (KR); Lee, Ki Young, 443-743 Gyunggi-do (KR)
(74) Representative: Heine, Christian Klaus

(57) **Abstract**

Disclosed herein is a rotor assembly, including: a rotor portion provided with an insertion hole into which a rotating shaft is inserted; and a magnet inserted into an embedded hole radially formed at a cross section axially vertical to the shaft of the rotor portion outwardly from the rotor portion, wherein the magnet is formed so that a width in a direction vertical to a radial direction of the magnet gradually increases from the shaft radially outwardly from the rotor portion. According to the preferred embodiment of the present invention, more magnets can be arranged in the same area, the freedom of design can be improved, and the flux amount can be increased, by the structural change of the magnet embedded in the rotor portion.

## Description

### CROSS REFERENCE TO RELATED APPLICATION

This application claims the benefit of Korean Patent Application No. 10-2012-0042283, filed on April 23, 2012, entitled "Rotor Assembly", which is hereby incorporated by reference in its entirety into this application.

### BACKGROUND OF THE INVENTION

### 1. Technical Field

The present invention relates to a rotor assembly.

### 2. Description of the Related Art

Generally, a motor generating rotation driving power by inserting a permanent magnet into a rotor may be classified into a surface-mounted permanent motor and an interior permanent motor according to a coupling structure of a permanent magnet mounted in a rotor.

As described in Korean Patent Laid-Open Publication No. 2009-00722209, the interior permanent motor may use reluctance torque due to a difference between a d-axis (magnetic flux) inductance and a q-axis (torque) inductance in addition to a torque of the permanent magnet by embedding a plurality of permanent magnets in the rotor. In addition, the interior permanent motor may structurally prevent a separation of the permanent magnet that may occur at the time of high-speed rotation and has been more prevalently used than the surface-mounted type motor in which the permanent magnet is mounted on a surface of the rotor.

The interior permanent motor according to the prior art needs to use a high-performance permanent magnet, for example, rare-earth magnet components due to a limitation of an embedded structure of the permanent magnet so as to increase a flux amount or obtain high-efficiency torque. Therefore, a demand for a freedom of design in the same structure as a case in which the permanent magnet is embedded has been increased. Due to the design limitation of the embedded structure of the permanent magnet, an opportunity to select various interior permanent magnets is reduced. Therefore, there is a problem in that performance and characteristics of the motor need to be determined by a kind of permanent magnets.

### SUMMARY OF THE INVENTION

The present invention has been made in an effort to provide a rotor assembly capable of reducing cogging torque of a motor into which the rotor assembly is inserted, increasing a flux amount, increasing torque by changing a magnet embedded in a rotor portion of the rotor assembly and an air gap structure that is a spaced space between the rotor portion and a stator portion.

According to a preferred embodiment of the present invention, there is provided a rotor assembly, including: a rotor portion provided with an ins ertion hole into which a rotating shaft is inserted; and a magnet inserted into an embedded hole radially formed at a cross section axially vertical to the shaft of the rotor portion outwardly from the rotor portion, wherein the magnet is formed so that a width in a direction vertical to a radial direction of the magnet gradually increases from the shaft radially outwardly from the rotor portion.

The magnet may have a trapezoidal shape so that a width of the magnet gradually increases radially outwardly from the rotor portion.

Both sides of the magnet may be provided with tapered portions so that the width of the magnet gradually increases radially outwardly from the rotor portion.

The magnet may be embedded radially outwardly from the rotor portion, and may include a first magnet portion; and a second magnet portion extending from the first magnet portion and radially formed outwardly from the rotor, wherein the first magnet portion and the second magnet portion are sequentially coupled with each other radially outwardly from the rotor portion and a width of the first magnet portion in a direction vertical to the radial direction outwardly from the rotor portion is narrower than a corresponding width of the second magnet portion.

Both sides of the first magnet portion may be provided with tapered portions so that the width thereof gradually increases from the insertion hole radially outwardly from the rotor portion.

A boundary point extending from the first magnet portion to the second magnet portion by a relative difference of the width of the first magnet portion and the corresponding width of the second magnet portion may be further provided with a step portion.

The first magnet portion and the second magnet portion may be integrally formed with each other.

The first magnet portion and the second magnet portion may be separated from each other.

According to another preferred embodiment of the present invention, there is provided a rotor assembly including: a rotor portion provided with an insertion hole into which a rotating shaft is inserted and an embedded hole into which at least one magnet is radially inserted based on the insertion hole; and a stator portion including at least one stator salient pole formed to correspond to the magnet of the rotor portion and a stator yoke accommodating the rotor portion, wherein the magnet is formed so that a width in a direction vertical to a radial direction of the magnet gradually increases radially outwardly from the rotor portion.

The rotor assembly may further include an air gap formed in a spaced space between an outer side of the rotor portion and the stator salient pole, wherein a radial distance between corresponding surfaces of the stator salient pole facing the outer side of the rotor portion is variably formed along an outer circumference of the rotor portion.

The magnet may have a trapezoidal shape so that a width of the magnet gradually increases radially outwardly from the rotor portion.

Both sides of the magnet may be provided with tapered portions so that the width of the magnet gradually increases radially outwardly from the rotor portion.

The magnet may be embedded radially outwardly from the rotor portion, and may include the first magnet portion; and the second magnet portion extending from the first magnet portion and radially formed outwardly from the rotor, wherein the first magnet portion and the second magnet portion are sequentially coupled with each other radially outwardly from the rotor portion and a width of the first magnet portion in a direct ion vertical to the radial direction outwardly from the rotor portion is narrower than a corresponding width of the second magnet portion.

Both sides of the first magnet portion may be provided with tapered portions so that the width thereof gradually increases from the insertion hole radially outwardly from the rotor portion.

A boundary point extending from the first magnet portion to the second magnet portion by a relative difference of the width of the first magnet portion and the corresponding width of the second magnet portion may be further provided with a step portion.

The first magnet portion and the second magnet portion may be integrally formed with each other.

The first magnet portion and the second magnet portion may be separated from each other.

### BRIEF DESCRIPTION OF THE DRAWINGS

The above and other objects, features and advantages of the present invention will be more clearly understood from the following detailed description taken in conjunction with the accompanying drawings, in which:
FIG. 1A is a cross-sectional view of a rotor assembly according to a first preferred embodiment of the present invention and FIG. 1B is a perspective view of a shaft coupled with FIG. 1A;
FIG. 2 is a cross-sectional view of a rotor assembly according to a second preferred embodiment of the present invention;
FIG. 3 is a cross-sectional view of a rotor assembly according to a third preferred embodiment of the present invention;
FIG. 4 is a cross-sectional view of a rotor assembly with which a stator portion according to a fourth preferred embodiment of the present invention is coupled;
FIG. 5 is a cross-sectional view of a rotor assembly with which a stator portion according to a fifth preferred embodiment of the present invention is coupled;
FIG. 6 is a cross-sectional view of a rotor assembly with which a stator portion according to a sixth preferred embodiment of the present invention is coupled;
FIG. 7A is a cross-sectional view of the rotor assembly according to a general magnet structure and FIG. 7B is a cross-sectional view of the rotor assembly according to the magnet structure according to the preferred embodiment of the present invention;
FIG. 8A is a graph showing a counter electromotive force (Bemf) waveform and a counter electromotive force integer (KE) value according to the general magnet structure and FIG. 8B is a graph showing a counter electromotive force (Bemf) waveform and a counter electromotive force integer (KE) value according to the magnet structure according to the preferred embodiment of the present invention;
FIG. 9 is a graph shown by overlapping a graph of a cogging torque value according to the general magnet structure and a graph of a cogging torque according to the magnet structure according to the preferred embodiment of the present invention;
FIG. 10 is a graph shown by overlapping graphs of a cogging torque value in the case in which a radial distance of an air gap according to the preferred embodiment of the present invention is constant and the case in which a radial distance of an air gap according to the preferred embodiment of the present invention is variable; and
FIG. 11A is a graph of a counter electromotive integer value when the radial distance of the air gap according to the preferred embodiment of the present invention is variable and FIG. 11B is a graph of a counter electromotive integer value when the radial distance of the air gap according to the preferred embodiment of the present invention is constant.

### DESCRIPTION OF THE PREFERRED EMBODIMENTS

The objects, features and advantages of the present invention will be more clearly understood from the following detailed description of the preferred embodiments taken in conjunction with the accompanying drawings. Throughout the accompanying drawings, the same reference numerals are used to designate the same or similar components, and redundant descriptions thereof are omitted. Further, in the following description, the terms "first", "second", "one side", "the other side" and the like are used to differentiate a certain component from other components, but the configuration of such components should not be construed to be limited by the terms. Further, in the description of the present invention, when it is determined that the detailed description of the related art would obscure the gist of the present invention, the description thereof will be omitted.

Hereinafter, preferred embodiments of the present invention will be described in detail with reference to the accompanying drawings.

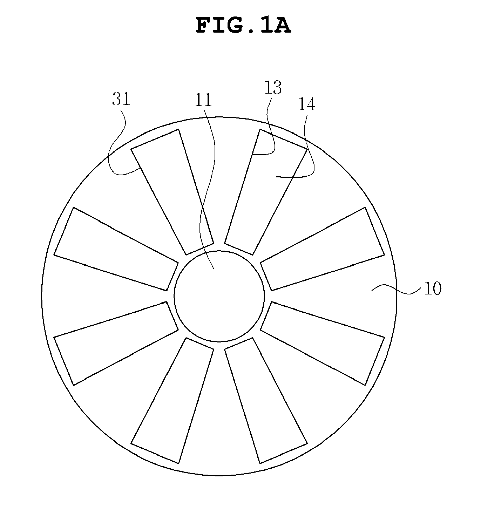

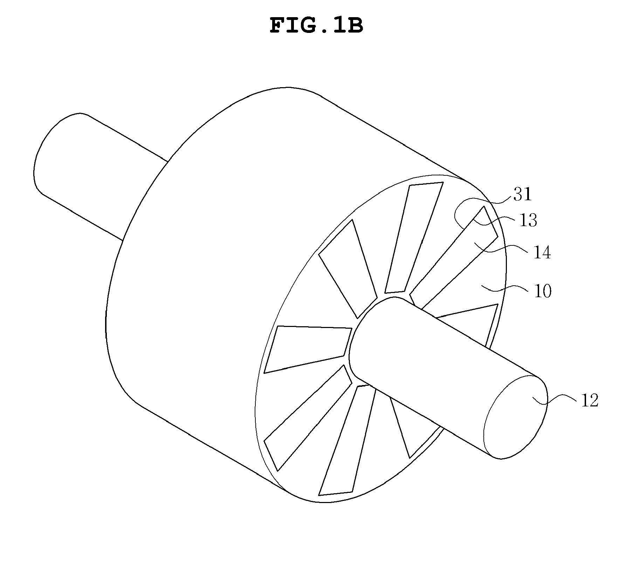

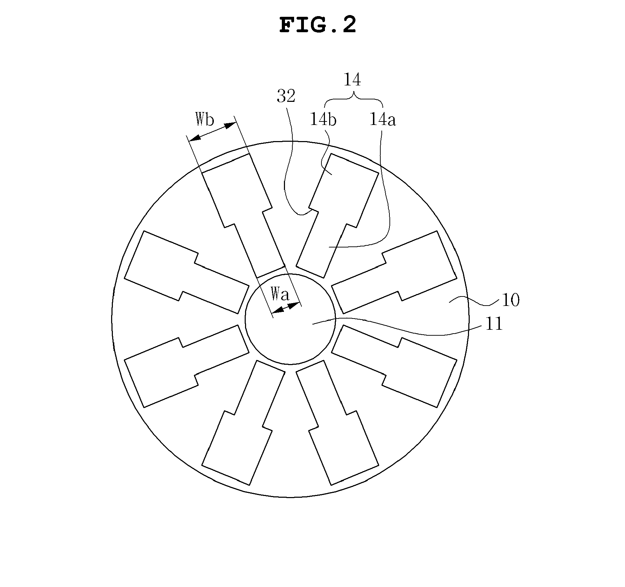

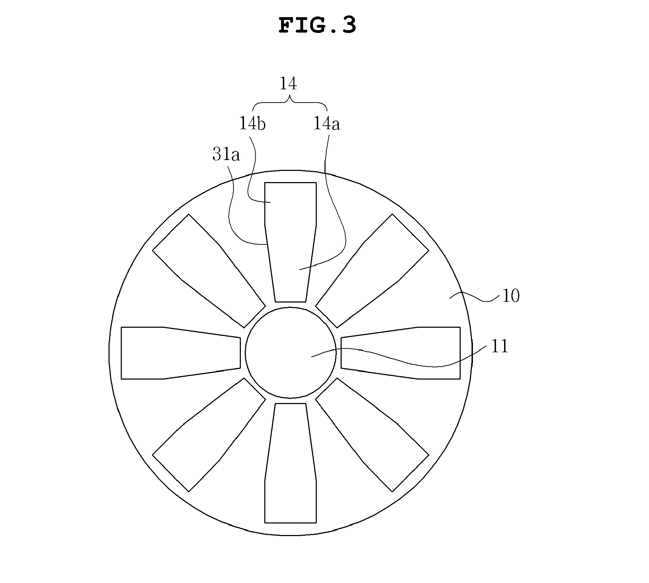

FIG. 1A is a cross-sectional view of a rotor assembly according to a first preferred embodiment of the present invention and FIG. 1B is a perspective view of a shaft coupled with FIG. 1A, FIG. 2 is a cross-sectional view of a rotor assembly according to a second preferred embodiment of the present invention, and FIG. 3 is a cross-sectional view of a rotor assembly according to a third preferred embodiment of the present invention.

The rotor assembly according to a preferred embodiment of the present invention includes a rotor portion 10 provided with an insertion hole 11 into which a rotating shaft 12 is inserted and a magnet 14 inserted into an embedded hole 13 radially formed at a cross section axially vertical to the shaft 12 of the rotor portion 10 outwardly from the rotor portion 10, wherein the magnet 14 may be formed so that a width in a direction vertical to a radial direction of the magnet 14 gradually increases from the shaft 12 toward a radial direction outwardly from the rotor portion 10.

A hollow portion of the rotor portion 10 is provided with the insertion hole 11 into which the rotating shaft 12 is inserted. The rotor portion 10 may be generally formed in a cylindrical member and may be inserted with the shaft 12 or integrally formed with the shaft 12 so that the rotor portion 10 may be mounted at the outside of the housing (not shown) to axially rotate with a general housing (see FIG. 1B). The present invention relates to the rotor portion 10 in which the magnet 14 is embedded. Hereinafter, the magnet 14 may use a permanent magnet, such as a ferrite permanent magnet, a rare-earth permanent magnet, an alico permanent magnet. In particular, a rare-earth permanent magnet may include SmCo and NdFeB, wherein the SmCo may have high residual magnetic flux density, coercive force, and energy product and temperature coefficients such as demagnetizing curve and NdFeB may have residual magnetic flux density and coercive force characteristics higher than the SmCo. In particular, it is possible to equivalently increase the efficiency and torque of the motor using various substitute permanent magnet in addition to the high-performance rare-earth permanent magnet, by structurally changing the magnet 14 radially embedded in the rotor portion 10.

The magnet 14 is inserted into the embedded hole 13 that is formed on a cross section vertical to the axial direction of the shaft 12 of the rotor portion 10. The embedded hole 13 may be formed to correspond to the shape of the magnet 14. As shown in FIG. 1A, the magnet 14 may be formed by setting the radial direction outwardly from the rotor portion 10 as a longitudinal direction. In particular, the magnet 14 may be formed so that the width thereof gradually increases from the insertion hole 11 into which the shaft 12 is inserted radially outwardly from the rotor portion 10. Herein, the 'width' of the magnet 14 means the width of the magnet 14 vertically formed radially when a longitudinal direction of the magnet 14 is radially formed outwardly from the rotor portion 10. The magnet 14 may be formed at the inner side and the outer side of the rotor portion 10 in a trapezoidal shape that is formed at a difference in a relative width. However, as described below, the shape of the magnet 14 is not limited thereto and may be designed in various structures while having the relative difference of the widths of the magnet 14 of the inner side and the outer side of the rotor portion 10.

As shown in FIG. 1A, the magnet 14 inserted into the rotor portion 10 is inserted into the embedded hole 13 radially formed outwardly from the inner side of the rotor portion 10. The magnet 14 may be formed to gradually increase from the inner side of the rotor portion 10 radially outwardly therefrom and a tapered portion 31 may be formed at both sides radially from the magnet 14 for this shape. The tapered portions 31 formed at both sides may be formed to be symmetrical to each other.

In addition, when the magnet 14 is radially formed outwardly from the rotor portion 10, the first magnet portion 14a and the second magnet portion 14b may be coupled with each other or integrally formed. The second magnet portion 14b extends from the first magnet portion 14a to be radially formed outwardly from the rotor portion 10. The width of the first magnet portion 14a extends from the first magnet portion 14a to be narrower than the width of the second magnet portion 14b radially formed outwardly from the rotor portion 10. Here, the first magnet portion 14a and the second magnet portion 14b may mean a part of all the magnets 14 forming a single magnet 14. In addition, the first magnet portion 14a and the second magnet portion 14b are each separated from each other and the first magnet portion 14a and the second magnet portion 14b may be embedded in the single embedded hole 13 to perform a function similar to the single magnet 14.

As shown in FIG. 2, a step portion 32 may be further formed at a boundary point extending from the first magnet portion 14a to the second magnet portion 14b by the relative difference between the width of the first magnet portion 14a and the width corresponding to the second magnet portion 14b. That is, the first magnet portion 14a is formed in a rectangle having width wa and the second magnet portion 14b may be formed in a rectangular shape having width wb larger than the width wa. Therefore, a step portion 32 may be formed at the boundary point at which the first magnet portion 14a and the second magnet portion 14b extend, by a difference between the width wa and the width wb.

As shown in FIG. 3, the first magnet portion 14a may be formed, both sides of the first magnet portion 14a may be formed with the tapered portion 31 having a width increased from the embedded hole 11 radially outwardly from the rotor portion 10. As described above, the tapered portions 31a may be preferably formed at both sides of the magnet 14 so as to be symmetrical with each other.

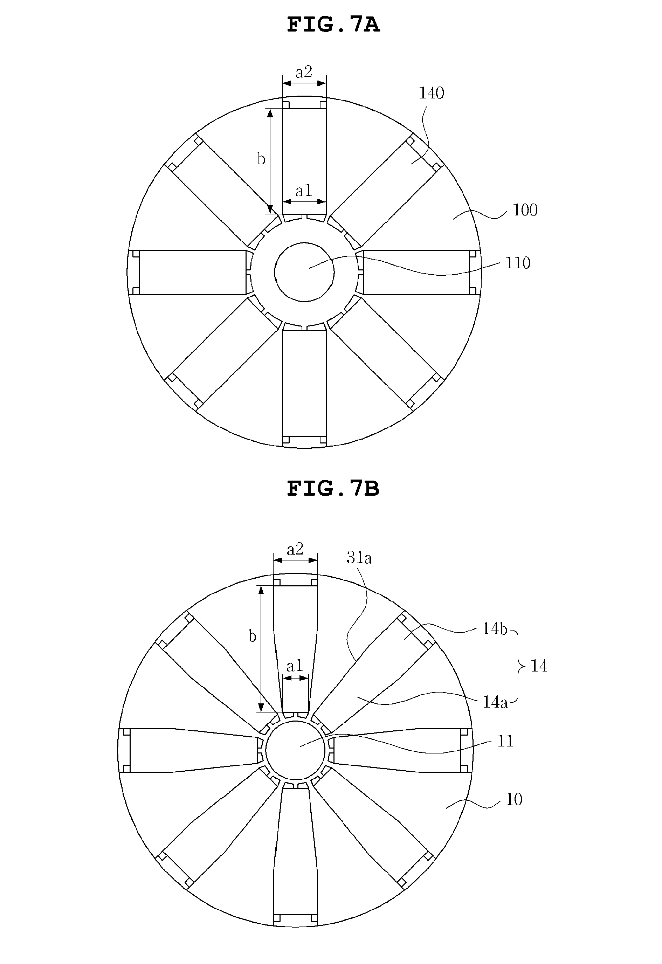

In detail, differences of effects of the present invention will be described through the comparison of the structure of FIGS. 7A and 7B. FIG. 7A shows a rotor assembly according to the insertion structure of the general magnet 140 different from the structure of the present invention and FIG. 7B shows a structure of the rotor assembly having the structure of the magnet 14 according to the present invention.

When the stator portion 20 formed to accommodate the rotor portion 10, the air gap spaced between the stator portion 20 and the rotor portion 10, and a pole number and an outer diameter of the shaft 12 are the same, the structural effect, the increase effect of the torque, and the reduction in cogging torque will be described below.

First, in the case of the general magnet 140 structure as shown in FIG. 7A, when the inner width a1 and the outer width a2 of the rectangular magnet 140 are formed at 7.5 mm, the longitudinal width b can be designed at 18 mm. However, according to the preferred embodiment of the present invention, as shown in FIG. 7B, when the magnet is formed to have he relative difference in a width as the inner width a1 of 4.5 mm and the outer width a2 of 8.5 mm, the inner width a1 is thicker than the outer width a2 of FIG. 7A that is the structure to be compared, thereby reducing the demagnetizing effect of the magnet 14. In addition, the inner width a1 of the magnet 14 according to the preferred embodiment of the present invention is formed to be relatively narrower than the outer width a2 thereof and as a result, the longitudinal width b of the magnet 14 may be formed to be longer at 21.5 mm. As a result, it is possible to more increase the flux amount by the magnet 14 on the same structure.

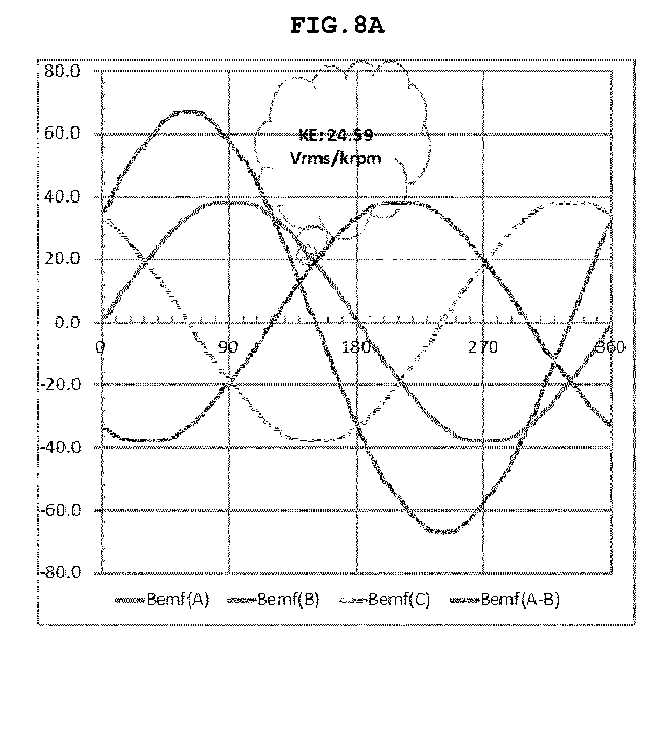

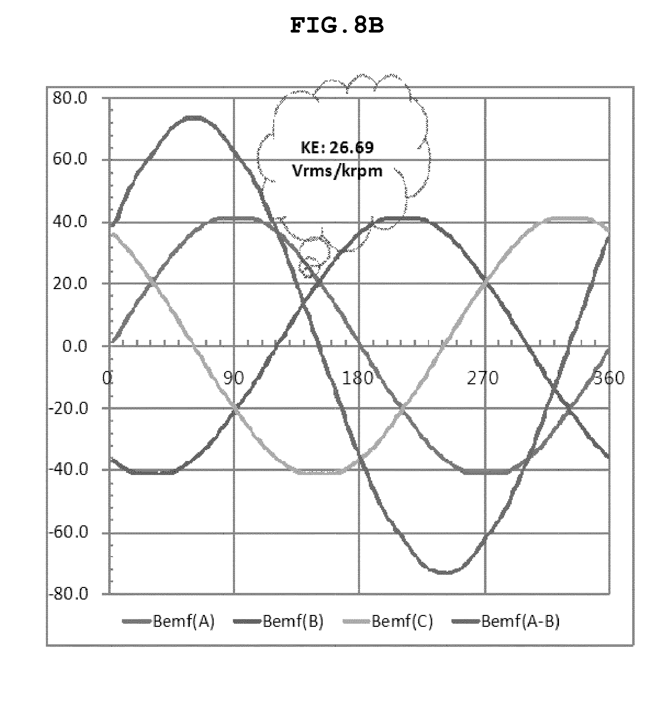

In addition, even in the case of the counter electromotive force, it can be appreciated that in the structure of the magnet 14 structure according to the preferred embodiment of the present invention, the counter electromotive integer ke is more increased to 8.54% in the general structure. FIGS. 8A and 8B show graphs depending on the counter electromotive integer value between the general magnet structure and the magnet 14 structure according to the preferred embodiment of the present invention. An X axis represents an electrical angle and a Y axis represents voltage. Each graph shows a graph of the counter electromotive force shown according to each phase in the case in which the rotor portion 10 rotates. For example, when blue represents phase A, red represents phase B and green represents the counter electromotive force according to the electrical angle and the voltage of phase C. Purple represents a counter electromotive force when phase A and phase B are simultaneously measured. As can be appreciated from the graph, it can be appreciated that the value of the counter electromotive force according to the magnet 14 structure according to the preferred embodiment of the present invention may be measured higher by about 8.54%. Therefore, it can be appreciated that in the magnet 14 structure according to the preferred embodiment of the present invention, the torque value is relatively increased. In particular, it can be confirmed that the increase in torque value is more remarkably increased at the time of the middle and low-speed driving.

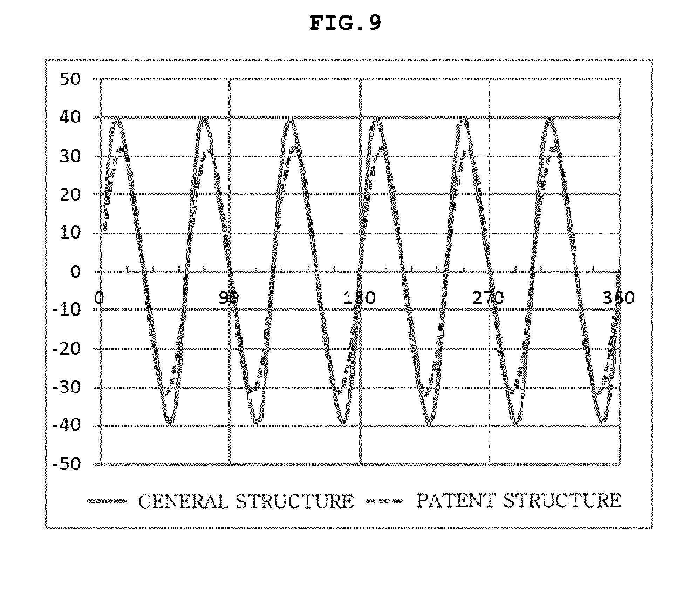

FIG. 9 is a graph shown by overlapping a graph of a cogging torque value according to the general magnet structure and a graph of a cogging torque according to the magnet 14 structure according to the preferred embodiment of the present invention. Here, an X axis represents an electrical angle and a Y axis represents a torque value. A blue graph on the graph represents a change in a cogging torque value in the general magnet structure. A red dotted-line graph represents a change in a cogging torque value according to the magnet 14 structure according to the preferred embodiment of the present invention. As can be appreciated from a graph of both cogging torque values, it can be appreciated that the cogging torque value according to the preferred embodiment of the present invention is measured as a lower value by approximately 23% than in the general structure. The cogging torque is radial force moving to a position (equilibrium state) at which the magnetic energy of the motor system is minimal, which is generated by a difference in magnetic resistance due to a shape of outer ends of salient poles 21 of the stator portion 20 and an opening width between the salient poles 21 and a shape and an opening width of a rotor pole facing the stator salient pole 21 of the rotor portion 10 in which the magnet is embedded and the size thereof is determined. As the cogging torque value is bw, the rotation is smooth and the efficiency of the motor rotation may be improved.

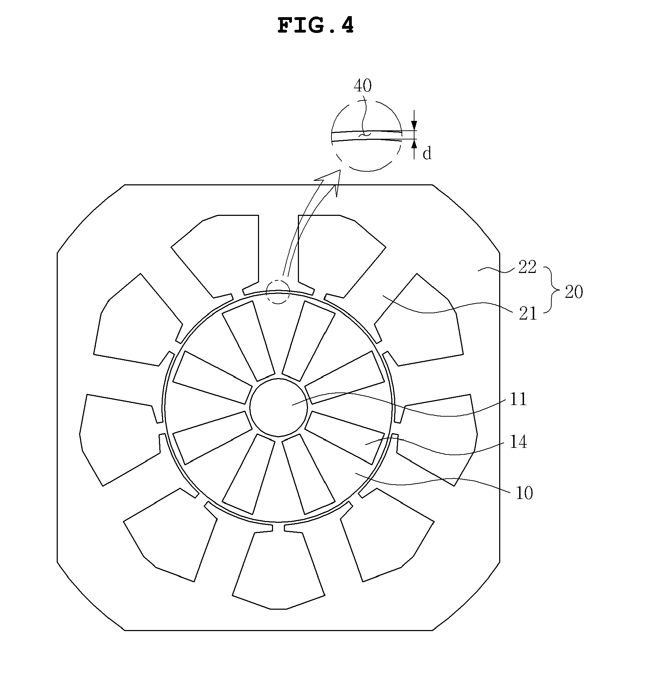

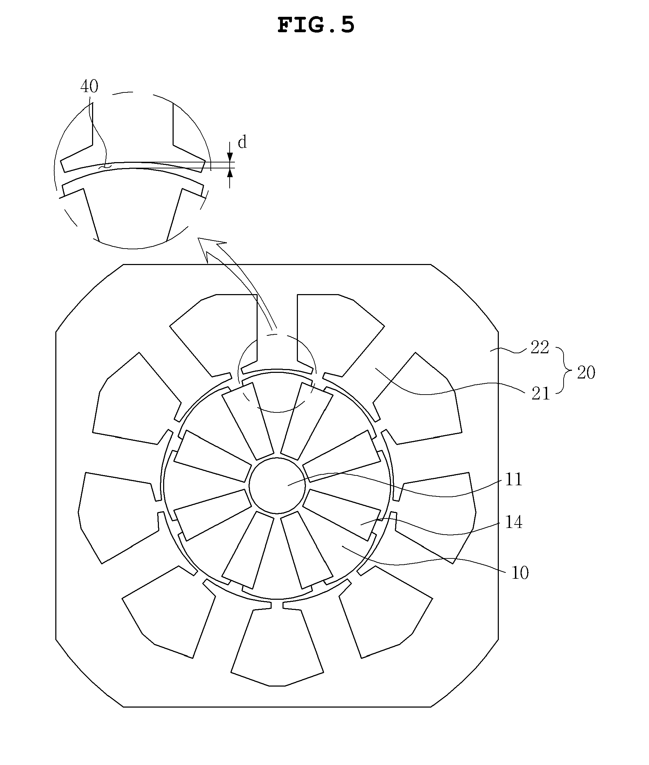

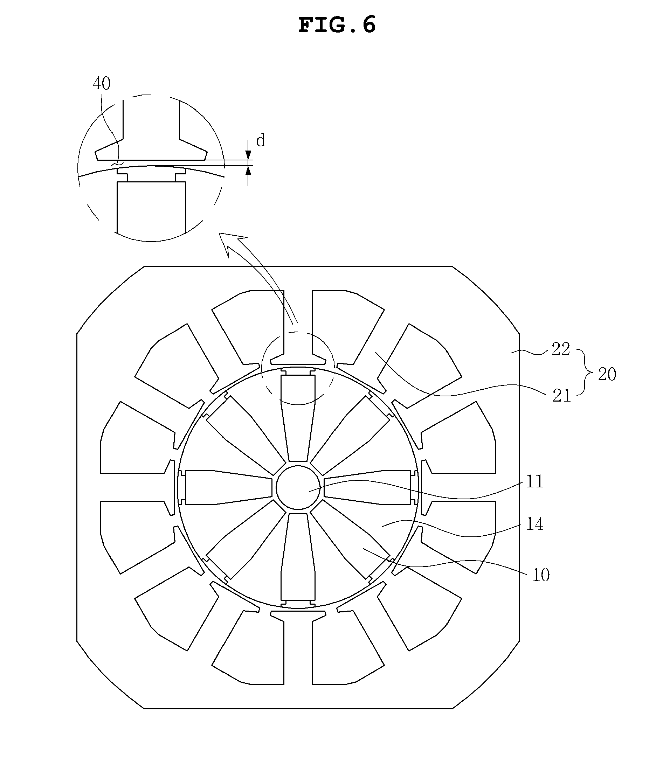

FIG. 4 is a cross-sectional view of a rotor assembly with which a stator portion 20 according to a fourth preferred embodiment of the present invention is coupled, FIG. 5 is a cross-sectional view of a rotor assembly with which a stator portion 20 according to a fifth preferred embodiment of the present invention is coupled, and FIG. 6 is a cross-sectional view of a rotor assembly with which a stator portion 20 according to a sixth preferred embodiment of the present invention is coupled.

According to the fourth preferred embodiment of the present invention, the rotor assembly includes the rotor portion 10 provided with the insertion hole 11 with which the rotating shaft 12 is coupled and the embedded hole 13 into which at least one magnet 14 is radially inserted based on the insertion hole 11; and the stator portion 20 including a state yoke 22 including at least one stator salient pole 21 and the rotor portion 10 formed to correspond to the magnet 14 of the rotor portion 10, wherein the magnet 14 is formed so that the width in a direction vertical to the radial direction of the magnet 14 gradually increases radially outwardly from the rotor portion 10.

In particular, the fourth preferred embodiment of the present invention and the fifth and sixth preferred embodiment to be described below relate the rotor assembly in which the stator portion 20 is coupled with the rotor portion 10 and have features in which the cogging torque is reduced by changing the shape of the magnet 14 and the structural change of the air gap 40 formed according to the coupling of the stator portion 20 of the rotor portion 10.

The rotor portion 10 is provided with the insertion hole 11 into which the rotating shaft 12 is inserted and the embedded hole 13 into which at least one magnet 14 is inserted radially outwardly from the rotor portion 10 based on the insertion hole 11. The rotor portion 10 with which the shaft 12 is coupled is the same as the drawings of FIGS. 1 to 3 and each description, configuration, and acting effect, and the like thereof and therefore, the description thereof will be omitted.

The stator portion 20 may include the stator yoke 22 that accommodates at least one stator salient pole 21 and the rotor portion formed to correspond to the magnet 14 of the rotor portion 10. The stator portion 20 is generally formed in an annular shape formed to surround the rotor portion 10 and may be changed and selectively applied by those skilled in the art according to a structure of a device in which the rotor assembly is mounted. As shown in FIG. 4, the stator portion 20 is formed to surround the outer circumference of the rotor portion 10. The stator portion 20 is configured to include the stator yoke 22 and the stator salient pole 21. The annular stator yoke 22 formed to surround the outer side of the rotor portion 10 is coupled with at least one stator salient pole 21 that is protrudedly formed at the inner circumferential surface of the stator yoke 22 and having a coil wound therearound. As shown in FIG. 4, even in the preferred embodiment of the present invention, the magnet 14 inserted into the rotor portion 10 may be formed so that the width thereof increases radially outwardly from the rotor portion 10. The preferred embodiment according to the magnet 14 shape is the same as the description of the magnet 14 structure according to the first to third preferred embodiment of the present invention and the detailed description thereof will be omitted.

As shown in FIGS. 5 and 6, the rotor assembly of the preferred embodiment of the present invention further include the air gap 40 formed in the spaced space between the outer side of the rotor portion 10 and the stator salient pole 21 and the radial distance d between the corresponding surfaces of the stator salient pole 21 facing the outer side of the rotor portion 10 may be variably formed along the outer circumference of the rotor portion 10. In order to variably form the radial distance of the air gap 40, the rotor portion 10 or the stator portion 20 can be structurally changed.

In the case of FIG. 5, the corresponding surface of the stator salient pole 21 facing the outer side of the rotor portion 10 of the stator portion 20 is formed in a concentric structure and the outer circumferential surface facing the stator salient pole 21 of the rotor portion 10 is formed in an eccentric structure, such that the radial distance d of the air gap 40 formed between the rotor portion 10 and the stator portion 20 may be variably formed. Unlike the description of FIG. 5, FIG. 6 shows a case in which the rotor portion 10 is formed in a concentric structure and the stator portion 20 is formed in an eccentric structure.

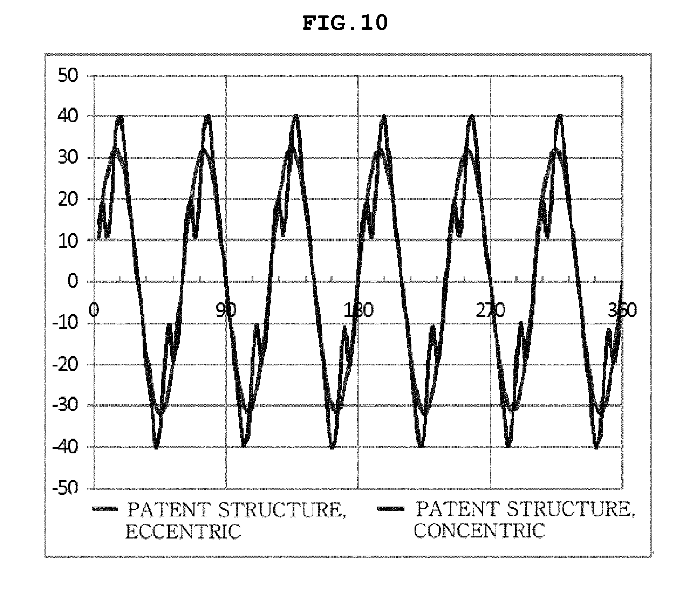

The radial distance d of the air gap 40 is variably formed along the outer circumference of the rotor portion 10, such that the cogging torque generated by the magnetic resistance can be reduced. As can be appreciated from a graph shown in FIG. 10, it can be appreciated that when in the same structure, the radial distance d of the concentric structure, that is, the air gap 40 is formed at equidistance, the cogging torque (a blue graph, a solid line) is larger than the cogging torque (a red graph, a dotted line) when the radius distance d of the air gap 40 is variably formed. Therefore, the radial distance d of the air gap 40 is variably formed, such that the cogging torque according to the rotor assembly may be reduced.

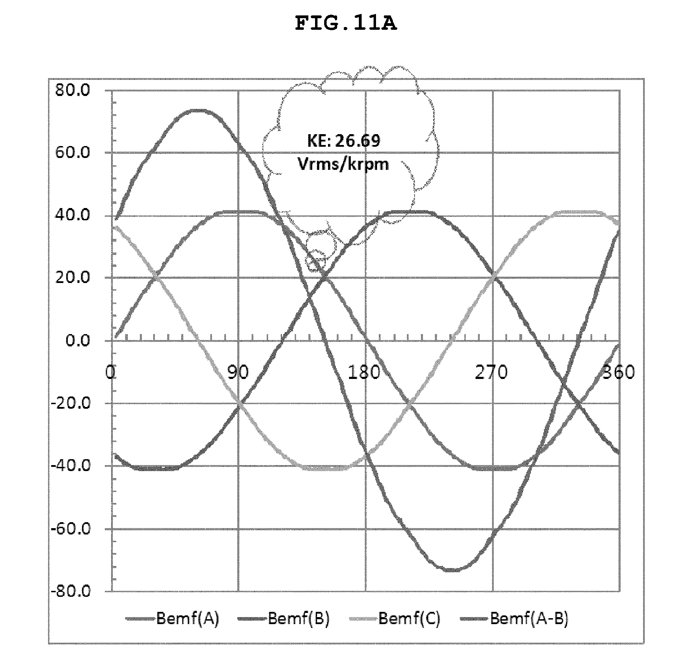

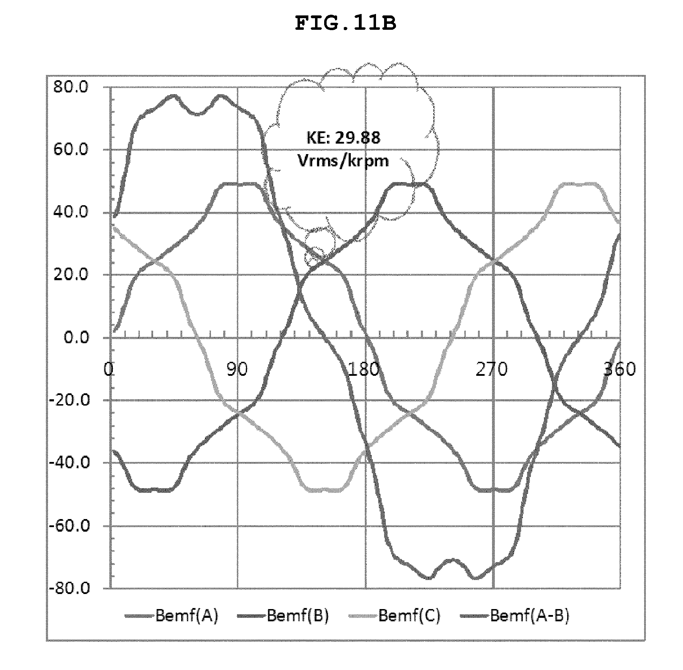

In addition, reviewing FIGS. 11A and 11b, it can be appreciated that the waveform of the counter electromotive force (see FIG. 11A) when the radius distance d of the air gap 40 is variably formed to approach a sine wave than the waveform of the counter electromotive force (see FIG. 11B) when in the same structure, the radial distance d of the concentric structure, that is, the air gap 40 is formed at equidistance. Therefore, the radial distance d of the air gap 40 formed between the rotor portion 10 and the stator portion 20 is variably formed along the outer circumference of the rotor portion 10 and thus, it is possible to more easily control pulse width modulation (PWM). The description of the graph showing the description of each axis and each color of FIGS. 11A and 11B is the same description as FIGS. 8A and 8B and therefore, the description thereof will be omitted herein.

According to the preferred embodiment of the present invention, more magnets can be arranged in the same area, the freedom of design can be improved, and the flux amount can be increased, by the structural change of the magnet embedded in the rotor portion.

In addition, the magnet radially embedded in the rotor portion can have the trapezoidal shape having the radially increased width and thus, the width of the magnet of the portion facing the stator portion of the outside of the rotor portion can be controlled to the structure in which the cogging torque can be minimized, thereby reducing the cogging torque occurring at the time of rotating the motor.

Further, it is possible to more increase the flux amount and more improve the torque of the motor to which the rotor assembly is applied than the case in which the magnet having the general structure is embedded, by structurally changing the magnet shape according to the preferred embodiment of the present invention.

Also, it is possible to relatively increase the number of interior magnets or the flux power of the magnets and expand the opportunity to select the permanent magnet used as the magnet by structurally changing the magnet shape according to the preferred embodiment of the present invention.

Moreover, it is possible to reduce the cogging torque occurring at the time of driving the motor by variably designing the radial width of the air gap that is the spaced space of the stator salient pole surface facing the outer side of the rotor portion of the rotor assembly.

Further, it is possible to improve the control performance by the structure of easily controlling the pulse width modulation by approximating the counter electromotive force to the sine wave.

Although the embodiments of the present invention have been disclosed for illustrative purposes, it will be appreciated that the present invention is not limited thereto, and those skilled in the art will appreciate that various modifications, additions and substitutions are possible, without departing from the scope and spirit of the invention.

Accordingly, any and all modifications, variations or equivalent arrangements should be considered to be within the scope of the invention, and the detailed scope of the invention will be disclosed by the accompanying claims.

## Claims

1. A rotor assembly, comprising:
a rotor portion provided with an insertion hole into which a rotating shaft is inserted;
and
a magnet inserted into an embedded hole radially formed at a cross section axially vertical to the shaft of the rotor portion outwardly from the rotor portion,
wherein the magnet is formed so that a width in a direction vertical to a radial direction of the magnet gradually increases from the shaft radially outwardly from the rotor portion.

2. The rotor assembly as set forth in claim 1, wherein the magnet has a trapezoidal shape so that a width of the magnet gradually increases radially outwardly from the rotor portion.

3. The rotor assembly as set forth in claim 1, wherein both sides of the magnet are provided with tapered portions so that the width of the magnet gradually increases radially outwardly from the rotor portion.

4. The rotor assembly as set forth in claim 1, wherein the magnet is embedded radially outwardly from the rotor portion, and
includes a first magnet portion; and
a second magnet portion extending from the first magnet portion and radially formed outwardly from the rotor, and
wherein the first magnet portion and the second magnet portion are sequentially coupled with each other radially outwardly from the rotor portion and
a width of the first magnet portion in a direction vertical to the radial direction outwardly from the rotor portion is narrower than a corresponding width of the second magnet portion.

5. The rotor assembly as set forth in claim 4, wherein both sides of the first magnet portion are provided with tapered portions so that the width thereof gradually increases from the insertion hole radially outwardly from the rotor portion.

6. The rotor assembly as set forth in claim 4, wherein a boundary point extending from the first magnet portion to the second magnet portion by a relative difference of the width of the first magnet portion and the corresponding width of the second magnet portion is further provided with a step portion.

7. The rotor assembly as set forth in claim 4, wherein the first magnet portion and the second magnet portion are integrally formed with each other.

8. The rotor assembly as set forth in claim 4, wherein the first magnet portion and the second magnet portion are separated from each other.

9. A rotor assembly, comprising:
a rotor portion provided with an insertion hole into which a rotating shaft is inserted and an embedded hole into which at least one magnet is radially inserted based on the insertion hole; and
a stator portion including at least one stator salient pole formed to correspond to the magnet of the rotor portion and a stator yoke accommodating the rotor portion,
wherein the magnet is formed so that a width in a direction vertical to a radial direction of the magnet gradually increases radially outwardly from the rotor portion.

10. The rotor assembly as set forth in claim 9, further comprising an air gap formed in a spaced space between an outer side of the rotor portion and the stator salient pole,
wherein a radial distance between corresponding surfaces of the stator salient pole facing the outer side of the rotor portion is variably formed along an outer circumference of the rotor portion.

11. The rotor assembly as set forth in claim 9, wherein the magnet has a trapezoidal shape so that a width of the magnet gradually increases radially outwardly from the rotor portion.

12. The rotor assembly as set forth in claim 9, wherein both sides of the magnet are provided with tapered portions so that the width of the magnet gradually increases radially outwardly from the rotor portion.

13. The rotor assembly as set forth in claim 9, wherein the magnet is embedded radially outwardly from the rotor portion, and
includes the first magnet portion; and
the second magnet portion extending from the first magnet portion and radially formed outwardly from the rotor, and
wherein the first magnet portion and the second magnet portion are sequentially coupled with each other radially outwardly from the rotor portion and
a width of the first magnet portion in a direction vertical to the radial direction outwardly from the rotor portion is narrower than a corresponding width of the second magnet portion.

14. The rotor assembly as set forth in claim 13, wherein both sides of the first magnet portion are provided with tapered portions so that the width thereof gradually increases from the insertion hole radially outwardly from the rotor portion.

15. The rotor assembly as set forth in claim 13, wherein a boundary point extending from the first magnet portion to the second magnet portion by a relative difference of the width of the first magnet portion and the corresponding width of the second magnet portion is further provided with a step portion.

16. The rotor assembly as set forth in claim 13, wherein the first magnet portion and the second magnet portion are integrally formed with each other.

17. The rotor assembly as set forth in claim 13, wherein the first magnet portion and the second magnet portion are separated from each other.
